# FASCICULE DE BREVET EUROPEEN

(11) **EP 0 410 850 B1**
(45) Date de publication et mention de la délivrance du brevet: **21.09.1994**
(21) Numéro de dépôt: 90402074.0
(22) Date de dépôt: 18.07.1990
(51) Int. Cl.: B60N 2/22

(54) **Dispositif permettant la compensation des jeux entre satellite et dentures des flasques de mécanismes réducteurs pour le réglage des positions des sièges, en particulier de sièges d'automobiles**
Einrichtung zum Ausgleich des Spieles zwischen dem Satelliten und den Zähnen der Flansche der Untersetzungsgetriebe für die Verstellung der Sitzposition, insbesondere von Kraftfahrzeuge
Device for the compensation clearances between satellite and toothings of the flanges of the reducing mechanisms for adjusting the position of seats, particularly of motor car seats

(30) Priorité: 24.07.1989 FR 8909930
(43) Date de publication de la demande: 30.01.1991
(73) Titulaire: ETS. COUSIN FRERES, F-61101 Flers Cédex (FR)
(72) Inventeur: Reubeuze, Yann, F-61100 Flers (FR)
(74) Mandataire: Madeuf, Claude Alexandre Jean

(56) Documents cités:
- EP-A- 0 207 182
- DE-A- 3 800 765
- DE-U- 8 705 554
- GB-A- 2 202 579

## Description

La présente invention a pour objet un dispositif permettant de compenser les jeux inhérents à la fabrication et à l'usure se produisant entre le satellite et les dentures des flasques des mécanismes réducteurs utilisés comme articulations pour le réglage des positions des sièges, en particulier des sièges d'automobiles.

On utilise de plus en plus dans les sièges des véhicules terrestres et aériens des mécanismes dits articulations comportant un élément réducteur pour le positionnement soit du dossier, soit de l'assise du siège, ces mécanismes étant constitués chacun par un flasque fixe solidaire, par exemple pour le dossier, de l'armature de l'assise tandis que le flasque mobile est solidaire de la partie inférieure de l'armature du dossier de ce siège.

Ces flasques contiennent intérieurement des dentures circulaires ayant un nombre de dents différent et qui sont entraînés l'un par rapport à l'autre au moyen d'un satellite double qui roule sur les dentures précitées au moyen d'une came dont le pourtour est muni d'un roulement à billes se situant dans la partie centrale évidée du satellite et cette came est elle-même entraînée par un arbre moteur commandé soit manuellement, soit au moyen d'un moteur de façon à régler à la volonté du passager l'inclinaison du dossier par rapport à l'assise.

Dans le cas où ces mécanismes réducteurs dits articulations rondes sont placés sous le siège pour régler l'assiette de l'assise, la partie fixe est solidaire du socle de l'assise et la partie mobile des bras agit sur la partie inférieure de l'armature de l'assise pour régler l'assiette de cette dernière.

En général, la jonction entre les flasques fixe et mobile et les organes formant l'armature fixe et l'armature mobile se fait soit à l'aide de boulons, soit à l'aide de rivets disposés à 120° les uns des autres sur le pourtour extérieur de ces flasques afin d'obtenir un montage rapide et sans problème de ces mécanismes d'articulation ronde sur les sièges considérés.

Cependant, du fait des tolérances de fabrication et, en particulier, de l'ovalisation obligatoire des différentes dentures qui sont obtenues le plus souvent par découpage fin, ainsi que par l'usure de ces dentures, il se produit des jeux qui donnent un léger battement soit à l'assise, soit au dossier et l'on a, par différents moyens, essayé de remédier à ces jeux mais jusqu'à présent ces mécanismes sont peu actifs ou coûteux en nécessitant un montage parfois difficile sur machine automatique.

On connaît cependant par GB-A-2 202 579 une articulation de siège d'automobiles à mécanismes réducteurs dans laquelle on utilise deux parties coniques de l'arbre de commande pour compenser les jeux. Dans cette articulation, la tension d'un disque élastique tend à faire pénétrer les dentures des flasques l'une dans l'autre par l'intermédiaire des parties coniques en prenant appui, d'une part, sur l'un des flasques et, d'autre part, sur une bague portée par une pièce intermédiaire solidaire de ce flasque.

Une telle disposition ne donne pas entièrement satisfaction et, conformément à la présente invention, le dispositif permettant la compensation des jeux entre satellite et dentures des flasques de mécanismes réducteurs pour le réglage des positions des sièges, en particulier de sièges d'automobiles, dans lequel, à partir d'un mécanisme constitué par un flasque fixe contenant une denture intérieure, un flasque mobile contenant une denture intérieure maintenus l'un contre l'autre par une bague sertie et contenant un satellite à double denture, satellite reposant par l'intermédiaire d'un roulement à billes sur une came montée sur et entraînée par un arbre moteur, est caractérisé par le fait que l'arbre moteur à section carrée présente, à l'une de ses extrémités, une partie terminale conique et supporte, à son autre extrémité, un cône logé dans l'ouverture centrale du flasque fixe, un évidement central étant prévu dans la came et dans lequel la partie terminale conique de l'arbre moteur peut pénétrer, le cône étant repoussé par un ressort prenant appui contre une goupille traversant l'arbre moteur de façon que lorsqu'un point dur est rencontré par les dentures coopérantes du flasque fixe et du flasque mobile ainsi que les dentures du satellite il se produit un léger décalage longitudinal de l'arbre moteur soit dans un sens, soit dans un autre provoquant ainsi, par l'intermédiaire soit de la partie terminale conique, soit ducône, une modification de l'excentration du satellite assurant le passage du point dur puis dès ce point dur passé le ressort qui a été comprimé ou étiré par le mouvement considéré de l'arbre replace les différentes pièces dans l'état antérieur en rétablissant l'excentration d'origine.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une coupe diamétrale d'une articulation ronde comportant le dispositif permettant la compensation des jeux entre satellite et dentures des flasques, cette coupe étant réalisée suivant la ligne II-II de la fig. 2.

La fig. 2 est une vue de face, côté flasque mobile, de l'articulation ronde comportant le dispositif permettant la compensation des jeux.

La fig. 3 est une vue partielle, à plus grande échelle, suivant la ligne III-III de la fig. 2.

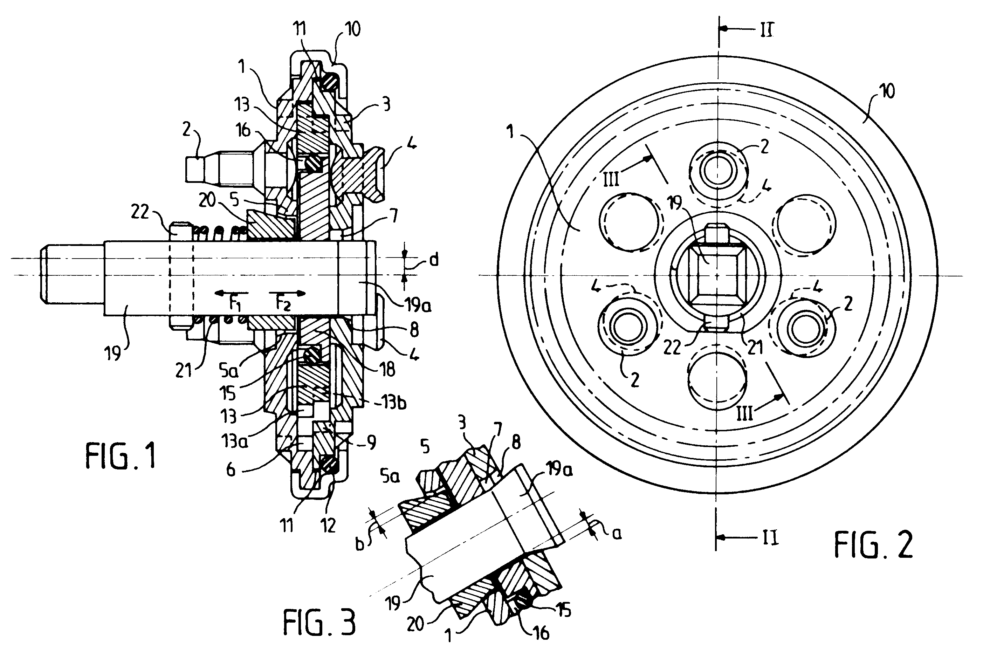

Comme on peut s'en rendre compte à la fig. 1, le flasque fixe 1 est maintenu, par des boulons 2 répartis à 120° les uns des autres sur l'armature du siège considéré tandis que le flasque mobile 3 est fixé par des rivets 4 disposés également à 120° les uns des autres sur la partie inférieure de l'armature du dossier du siège.

Le flasque fixe 1 présente, en son centre, une ouverture circulaire 5 dont la partie avant 5a est conique.

6 désigne la denture intérieure du flasque fixe 1.

Le flasque mobile 3 présente, en son centre, une ouverture 7 dont la partie avant 8 est également conique.

9 désigne la denture intérieure du flasque mobile 3.

Une bague sertie 10 maintient le flasque mobile 3 sur le flasque fixe 1 avec interposition d'un roulement à billes 12 tandis que le flasque mobile 3 est centré sur le flasque fixe 1 par l'intermédiaire d'un dégagement circulaire 11.

13 désigne le satellite à double denture 13a, 13b, la denture 13a coopérant avec la denture 6 du satellite fixe 1 et la denture 13b avec la denture 9 du satellite mobile 3.

Le satellite 13 est évidé, en son centre, pour recevoir un roulement à billes 15 maintenu par une cage 16 sur le pourtour extérieur d'une came 18 fixée sur un arbre 19 constituant l'arbre de commande permettant la rotation de la came 18 car cet arbre est, comme le montre la fig. 2, à section carrée.

De plus, il est à noter que l'excentration de la came par rapport à l'axe de l'arbre 19 est égale à d (voir Fig. 1). En général, l'excentration théorique est dans le rapport de 2,50.

L'extrémité 19a de l'arbre 19, côté droit, est usinée de façon à présenter une forme extérieure conique dont l'angle a est au maximum de 15° tandis que, côté interne, l'arbre 19 porte une pièce 20 de forme extérieure conique dont l'angle b (voir fig. 3) est également au maximum de 15°.

Cette pièce conique 20 est normalement repoussée à l'intérieur du satellite fixe 1 par un ressort 21 concentrique à l'arbre 19 et maintenu en place par une goupille 22 traversant l'arbre 19.

Comme cela est connu, lorsque l'arbre 19 tourne dans un sens ou dans l'autre, l'entraînement de la came 18 faisant rouler les dentures 13a, 13b du satellite 13 à fond de denture dans les dentures 6 et 9 des flasques fixe 1 et mobile 3 de façon que ce dernier tourne sur lui-même d'une certaine valeur mais du fait des jeux provoqués par les excentrations découlant des tolérances de fabrication et comme la came elle-même est excentrée, on obtient dans certaines positions ce qui est appelé un point dur c'est-à-dire que la rotation du flasque mobile 3 est presque bloquée. C'est alors que, par réaction de la came 18 sur l'arbre 19, celui-ci coulisse, par exemple dans le sens de la flèche F1 (voir fig. 1) en entraînant ainsi un décalage de cet arbre et une pénétration de la partie terminale 19a conique de l'arbre 19 dans l'évidement central de la came 18 qui est légèrement désexcentrée, ce qui a pour résultat une diminution de l'excentration prévue à l'origine et le passage du point dur.

Dans le sens d'une réaction suivant la flèche F2 (voir fig. 1), c'est la pièce conique 20 qui joue le même rôle et le résultat est le même.

Dès le passage du point dur obtenu, le ressort 21 ramène soit l'arbre 19, soit la pièce conique 20 dans la position première représentée à la fig. 1 et l'excentration de la came 18 redevient normale.

Ce mouvement est facilité du fait que les cônes 19a et 20 n'ont qu'un angle de 15° assurant un glissement parfait sous faible charge verticale.

Ce mouvement de translation étant très faible, il ne présente pas de difficulté même si l'arbre 19 est commandé en rotation par un moteur, par exemple un moyen motorisé.

Le dispositif permettant la compensation des jeux entre satellite et dentures de flasques de mécanismes réducteurs est très simple et permet dans tous les cas un montage rapide et précis sur des machines automatiques en réduisant ainsi le prix de revient des mécanismes.

De plus, cette construction est très résistante et assure une grande sécurité pour les sièges équipés.

## Revendications

1. Dispositif permettant la compensation des jeux entre satellite et dentures des flasques de mécanismes réducteurs pour le réglage des positions des sièges, en particulier de sièges d'automobiles, dans lequel à partir d'un mécanisme constitué par un flasque fixe (1) contenant une denture intérieure (6), un flasque mobile (3) contenant une denture intérieure (9) maintenus l'un contre l'autre par une bague sertie (10) et contenant un satellite (13) à double denture (13a, 13b) satellite reposant par l'intermédiaire d'un roulement à billes (15) sur une came (18) montée sur et entraînée par un arbre moteur (19) à section carrée, l'arbre moteur (19) présentant à l'une des ses extrémités, une partie terminale (19a) conique et supporte, à son autre extrémité, un cône (20) logé dans l'ouverture centrale du flasque fixe (1), un évidement central étant prévu dans la came (18) et dans lequel la partie terminale conique (19a) de l'arbre moteur (19) peut pénétrer, le cône (20) étant repoussé par un ressort (21) prenant appui contre une goupille (22) traversant l'arbre moteur (19) de façon que lorsqu'un point dur est rencontré par les dentures coopérantes (6) du flasque fixe (1) et (9) du flasque mobile (3) ainsi que les dentures (13a, 13b) du satellite (13) il se produit un léger décalage longitudinal de l'arbre moteur (19) soit dans un sens, soit dans un autre provoquant ainsi, par l'intermédiaire soit de la partie terminale conique (19a), soit du cône (20) une modification de l'excentration du satellite (13) assurant le passage du point dur puis dès ce point dur passé le ressort (21) qui a été comprimé ou étiré par le mouvement considéré de l'arbre (19) replace les différentes pièces dans l'état antérieur en rétablissant l'excentration d'origine.

2. Dispositif suivant la revendication 1, caractérisé en ce que l'angle des cônes (19a, 20) ne dépasse pas 15°.

## Claims

1. Device for compensating clearances between satellite and toothings of the flanges of reducing mechanisms for adjusting the positions of seats, particularly of motor car seats, in which from a mechanism constituted by a fixed flange (1) containing an inner toothing (6), a mobile flange (3) containing an inner toothing (9) held one against an other by a crimped ring (10) and containing a satellite (13) with a double toothing (13a, 13b), which satellite being supported by means of a ball bearing (15) on a cam (18) mounted on and driven by a driving shaft (19) of a square section, the driving shaft (19) having at one of its ends, a terminal conical portion (19a) and supporting, at its other end, a cone (20) housed in the central opening of the fixed flange (1), a central recess being provided in the cam (18) and into which the conical terminal portion (19a) of the driving shaft (19) can enter, the cone (20) being pushed back by a spring (21) bearing on a peg (22) extending through the driving shaft (19) so that when a hard point is met by the cooperating toothings (6) of the fixed flange (1) and (9) of the mobile flange (3) as well as the toothings (13a, 13b) of the satellite (13), a slight longitudinal offset of the driving shaft (19) is produced in either direction, thereby causing, by means of either the conical terminal portion (19a) or the cone (2), a change in eccentricity of the satellite (13) providing for passage of the hard point and, as soon as this hard point is passed, the spring (21) which has been compressed or extended by the considered movement of the shaft (19) restores the various parts in their prior state, thereby re-establishing the original eccentricity.

2. Device according to claim 1, characterized in that the angle of the cones (19a, 20) is not greater than 15°.

## Patentansprüche

1. Einrichtung zum Ausgleich des Spiels zwischen dem Satelliten und den Verzahnungen der Flansche der Untersetzungsgetriebe für die Verstellung der Position von Sitzen, insbesondere von Automobilen, mit einem Mechanismus, bestehend aus
einem feststehenden Flansch (1), der mit einer Innenverzahnung (6) ausgestattet ist, und einem beweglichen Flansch (3), der ebenfalls mit einer Innenverzahnung (9) ausgestattet ist, wobei beide Flansche durch einen Klemmring (10) zusammengehalten werden. Zwischen beiden befindet sich ein Satellit (13) mit einer Doppelverzahnung (13a und 13b). Der Satellit ist über ein Kugellager (15) mit einem Nocken (18) verbunden, der an der Antriebswelle (19) befestigt ist und über diese aufgrund ihres rechteckigen Querschnitts in Drehung versetzt wird, wobei das rechte äußere Endstück (19a) der Welle konisch ausgeformt ist und an dem anderen Endstück der Welle ein konusförmiges Teil (20) befestigt ist, das von der zentralen Öffnung des feststehenden Flansches (1) aufgenommen wird. Der Nocken (19) verfügt über eine mittig angeordnete Aussparung, in die das konusförmige Endstück (19a) der Antriebswelle (19) eindringen kann. Der Konus (20) wird durch eine Feder (21) zurückbewegt, die über einen Stift (22) arretiert wird, der durch die Antriebswelle (19) gesteckt ist. Wenn beim Eingriff der Verzahnungen (6) des feststehenden Flansches (1) u. (9) des beweglichen Flansches (3) mit den Verzahnungen (13a und 13b) des Satelliten (13) ein Widerstandspunkt erreicht wird, erfolgt eine leichte Verschiebung der Antriebswelle (19) in Längsrichtung nach links oder rechts, wodurch aufgrund entweder des konusförmigen Endstücks (19a) oder des Konus (20) die Exzentrizität des Satelliten (13) dahingehend verändert wird, daß der Widerstandspunkt überwunden wird. sobald dies geschehen ist, sorgt die Feder (21), die durch die Bewegung der Welle (19) entweder gestaucht oder gedehnt worden ist, für die Rückkehr der einzelnen Komponenten in die ursprünglich exzentrische Lage.

2. Vorrichtung nach Anspruch 1, gekennzeichnet dadurch,daß die Flanschwinkel der Konusse (19a, 20) nicht größer als 15° sind.
